# FASCICULE DE BREVET EUROPEEN

(11) **EP 1 199 483 B1**
(45) Date de publication et mention de la délivrance du brevet: **02.08.2006**
(21) Numéro de dépôt: 01402598.5
(22) Date de dépôt: 09.10.2001
(51) Int. Cl.: F16C 11/06, F16F 1/393, B61F 5/24

(54) **Rotule de liaison, par exemple pour barre anti-roulis de véhicule roulant.**
Drehgelenk, zum Beispiel für einen Stabilisator eines Radfahrzeuges
Swivel joint, for example for an anti-roll bar of a wheeled vehicle

(30) Priorité: 20.10.2000 FR 0013456
(43) Date de publication de la demande: 24.04.2002
(73) Titulaire: HUTCHINSON, 75008 Paris (FR)
(72) Inventeur: Garnier, Denis, 92300 Levallois Perret (FR); Beaubatie, Laurent, 94700 Maisons Alfort (FR)
(74) Mandataire: Jacquard, Philippe Jean-Luc

(56) Documents cités:
- EP-A- 0 334 081
- EP-A- 0 461 492
- DE-A- 3 536 284
- DE-A- 3 936 775
- FR-A- 2 656 580
- US-A- 4 034 996

## Description

L'invention concerne une rotule de liaison notamment pour barre antiroulis de véhicule roulant, et en particulier pour bogie et/ou caisse de train à grande vitesse.

Dans le domaine particulier, mais non limitatif, des barres anti-roulis (encore appelées barres stabilisatrices ou barres anti-dévers) couramment utilisées dans les systèmes de suspension automobile ou ferroviaire, la fonction d'une telle barre est de s'opposer aux efforts verticaux transmis aux roues dans les virages lorsque l'inertie du véhicule provoque un roulis transversal de ce dernier.

Les moyens de liaison ou de fixation d'une barre anti-roulis au châssis du véhicule ou aux bras de suspension peuvent être divers, et notamment comporter des paliers ou des rotules pourvus par exemple d'une bague élastique. De tels paliers ou rotules ont diverses fonctions, outre celle de fixer la barre au châssis, comme celle de filtrer les efforts pendant le roulis entre la structure du véhicule et ladite barre, ou celle de filtrer les vibrations de faible amplitude.

Il existe divers types de rotules permettant un certain débattement en rotation entre deux pièces rigides. Par exemple, on peut munir la rotule d'une bague en caoutchouc assez épaisse, ou en en polycarbonate avec une liaison par frottement. On peut aussi prévoir d'utiliser des rotules lubrifiées.

Mais, de telles rotules ne donnent pas encore satisfaction car elles ne filtrent pas correctement les vibrations, ce qui entraîne des bruits désagréables dus par exemple à la trop grande raideur des pièces qui empêchent, ou suite à la dégradation des pièces qui provoque un jeu et des claquements. Elles sont aussi peu résistantes. Enfin, elles ne présentent pas de bons rapports de débattements angulaires et de raideurs (radiale, en rotation, en torsion conique).

Le document DE-A-3936775 décrit un autre modèle de rotule.

Le but de l'invention est donc de résoudre une partie au moins de ces problèmes.

Pour cela, l'invention concerne une rotule de liaison, par exemple pour barre anti-roulis de véhicule roulant, ladite rotule comprenant un support rectiligne s'étendant selon un axe général d'allongement et un organe déformable élastiquement monté autour de ce support, comportant au moins une structure lamifiée composée de couche(s) en matériau souple élastiquement déformable et de couche(s) en matériau plus rigide, **caractérisé en ce que** l'organe élastiquement déformable comprendra des moyens pour précontraindre sa structure lamifiée.

Selon un mode de réalisation, l'organe élastiquement déformable pourra comprendre deux structures lamifiées annulaires coaxiales et deux manchons annulaires montés chacun autour d'une structure lamifiée pour précontraindre leurs couches élastiquement déformables une fois ces manchons liés entre eux à l'aide de moyens de fixation, la rotule présentant alors un plan de coupure sensiblement perpendiculaire à l'axe du support.

En particulier, les deux manchons présenteront chacun une surface de contact perpendiculaire à l'axe du support et seront soudés périphériquement au niveau de ces surfaces.

Selon un autre mode de réalisation, l'organe élastiquement déformable pourra présenter un plan de coupure passant par l'axe du support et comprendre deux structures lamifiées sensiblement hémisphériques s'étendant le long de l'axe xx' et deux demi-manchons, également sensiblement hémisphériques, entourant chacun une structure lamifiée pour précontraindre leurs couches élastiquement déformables.

En particulier, un tube extérieur pourra être serti autour des demi-manchons.

Afin de permettre de bons débattements angulaires de la rotule, tout en évitant d'avoir recours à un lubrifiant, chaque structure lamifiée sera constituée par une alternance de couches sensiblement hémisphériques en matériau souple élastiquement déformable (hyperélastique) et de couches (ou coupelles) sensiblement hémisphériques en matériau plus rigide. On tire ainsi pleinement profit des bonnes propriétés en cisaillement du caoutchouc pour améliorer cette capacité en rotation. En effet, ce matériau possède un module de cisaillement relativement bas (de l'ordre de 0,5 à 2 MPA) pour un module de compressibilité élevé (de l'ordre de 1100 MPA).

Avantageusement, chaque structure lamifiée présentera une couche souple hyperélastique à chacune de ses extrémités, l'une au contact d'un noyau sphérique, et l'autre au contact des moyens de précontrainte.

A titre d'exemple, le matériau souple hyperélastique pourra être un caoutchouc naturel et le matériau rigide un métal, et les couches en matériau souple et les couches en matériau rigide pourront avoir chacune une épaisseur de l'ordre du millimètre.

D'une façon générale, la rotule présente également une raideur radiale supérieure aux rotules de l'art antérieur, à encombrement et débattement possibles équivalents, et notamment une raideur radiale plus élevée que sa raideur en torsion et/ou en torsion conique.

De plus, les couches souples élastiquement déformables sont liées aux couches plus rigides de telle sorte que ces couches souples subissent, lorsqu'elles sont soumises à des efforts de rotation selon l'axe du support ou de rotation conique selon tout axe perpendiculaire à l'axe du support, principalement des efforts de cisaillement, sans aucun glissement par rapport aux couches plus rigides. Bien entendu, ces couches hyperélastiques sont soumises à des contraintes de compression (et de traction) en radial.

L'invention concerne également une barre anti-roulis pour véhicule roulant tel qu'un train à grande vitesse équipé d'une rotule de liaison telle que décrite précédemment.

D'autres avantages de l'invention ressortiront à la lecture de la description qui suit, faite à titre d'exemple en référence aux dessins annexés dans lesquels :
- la figure 1 est une vue de face de la rotule selon l'invention,
- la figure 2 est une vue de côté de la figure 1,
- la figure 3 est une vue en coupe de la figure 1,
- la figure 4 est une vue de détail de la figure 3,
- la figure 5 est une variante de réalisation de la figure 3, et
- la figure 6 est une vue en coupe de la figure 5.

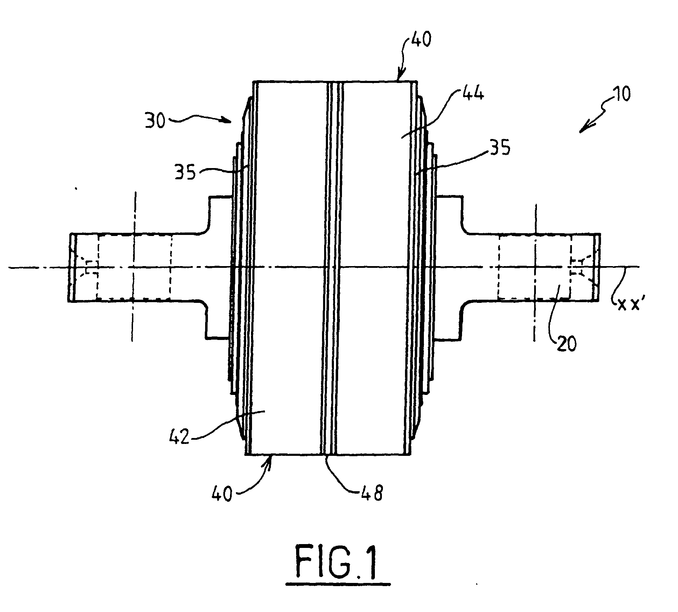

Sur la figure 1, on voit représenté une rotule lamifiée 10, par exemple pour barre anti-roulis (non représentée) de train à grande vitesse. Cette rotule 10 comprend un support 20 rectiligne s'étendant selon un axe principal d'allongement xx' et un organe 30 élastiquement déformable destiné en particulier à reprendre les efforts axiaux et radiaux tout en autorisant des débattements importants en rotation.

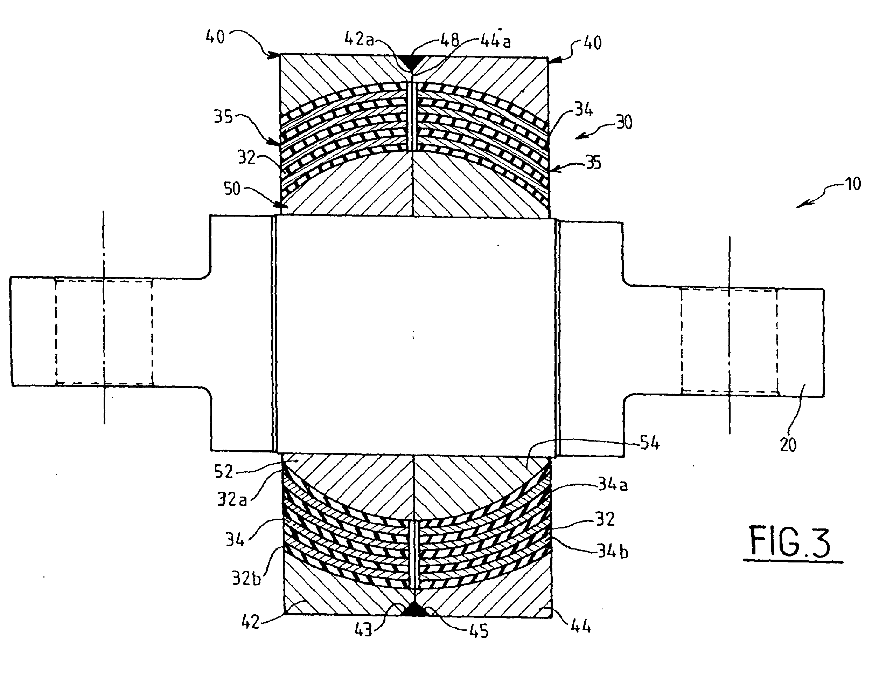

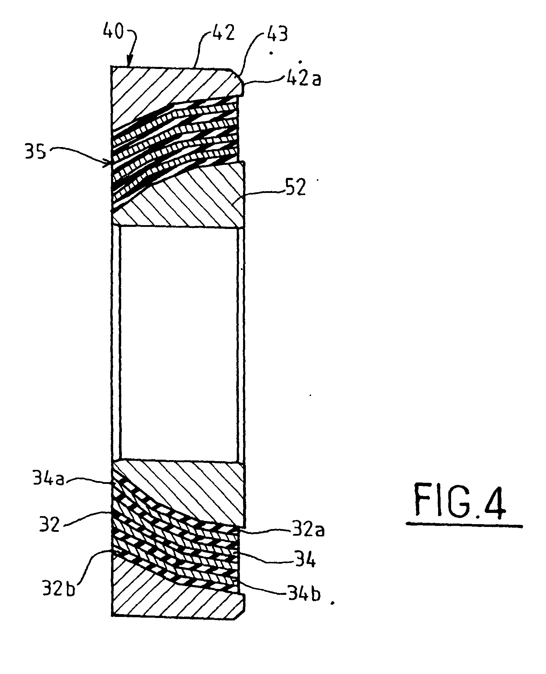

L'organe élastiquement déformable 30 comprend au moins une structure lamifiée 35 entourée par un moyen de précontrainte 40. Une description détaillée de cet organe 30 élastiquement déformable est faites plus loin, en relation avec les figures 3 et 4 notamment

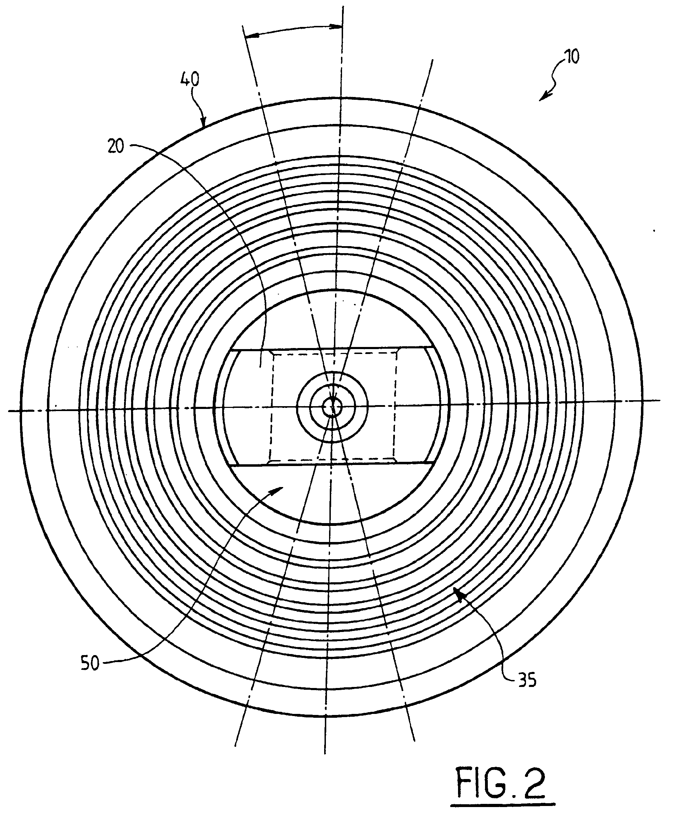

Comme on peut le voir sur la figure 2, le moyen de précontrainte 40 et la structure lamifiée 35 sont concentriques, la structure lamifiée 35 étant formée, comme on va le voir plus loin, par un empilement (sensiblement radial) de couches 32 et 34 réalisées dans des matériaux ayant des duretés différentes.

Les figures 3 et 4 montent plus en détail les couches 32 et 34 de chaque structure lamifiée 35. Comme on peut le voir en particulier sur la figure 3, l'organe élastiquement déformable 30 comprend en fait deux structures lamifiées 35 qui sont annulaires et coaxiales et qui se rejoignent selon un plan de jointure perpendiculaire à l'axe xx' du support 20. Elles doivent être montées sur le support de telle sorte que leurs centres géométriques respectifs soient sensiblement confondus. En pratique, ce centre est sensiblement situé à l'intersection de l'axe xx' et du plan de jointure des deux structures lamifiées 35, ce qui permet, lors du basculement de la rotule (sollicitation conique) que les couches travaillent en cisaillement.

Les structures lamifiées sont entourées respectivement de manchons 42 et 44, par exemple en acier, faisant office, une fois fixés l'un à l'autre de moyen de précontrainte (en particulier axiale) des structures lamifiées 35.

Chaque structure lamifiée 35 est ainsi constituée par un empilement alterné de couches 32 en matériau souple élastiquement déformable, tel que du caoutchouc naturel, et de couches, ou coupelles, 34 en matériau plus rigide, tel qu'un métal (acier de construction notamment).

On entend par matériau souple élastiquement déformable un matériau qualifié d'hyperélastique, c'est-à-dire ayant une capacité à se déformer élastiquement dans au moins une direction privilégiée dans des proportions élevée, par contraste avec un matériau rigide qui présente une faible zone de déformation élastique.

De plus, chaque structure lamifiée 35 commence et termine l'empilement par une couche 32a/32b en matériau souple. Ainsi, une couche 32a est au contact d'un des manchons 42 ou 44, l'autre couche 32b est au contact d'un noyau 50 de forme sphérique appartenant à l'organe élastiquement déformable 30 et éventuellement également solidaire du support 20. L'adhésion des couches 32 en caoutchouc et des parties métalliques (noyau 50, moyens de précontraintes 40, coupelles 34) est réalisée lors du moulage de la pièce par injection de caoutchouc entre les coupelles, par réaction chimique. Ce mode de réalisation est nettement plus performant que le collage ou tout autre moyen de liaison.

Bien entendu, chaque structure lamifiée 35 présente une forme intérieure et extérieure sensiblement hémisphérique, de telle sorte qu'elle épouse parfaitement la forme externe du noyau sphérique 50 et la forme interne des manchons 42 et 44.

Comme on peut le voir en détail sur la figure 4, l'épaisseur de chaque couche est relativement faible, par exemple de l'ordre du millimètre dans le cas présent. Les dimensions sont fonction de l'utilisation que l'on souhaite faire de cette rotule, et elles ne sont donc données qu'à titre indicatif. Il est toutefois important que les coupelles en métal 34 aient une résistance suffisante lors du moulage afin de ne pas se déformer sous la pression du caoutchouc. De même, si les couches 32 en caoutchouc sont trop fines, la matière aura du mal à circuler de façon homogène entre les coupelles 34 lors de l'injection, et il y aura alors un risque de création de poches creuses dans l'empilement.

La réalisation et le montage de cette rotule 10 sont particulièrement simples.

On réalise tout d'abord une première structure lamifiée 35 en emprisonnant, lors d'une phase de moulage par injection sous pression du caoutchouc entre les différentes coupelles 34, ainsi qu'entre une première coupelle 34a et un demi-noyau 52, et entre une dernière coupelle 34b un manchon 42. On crée ainsi un ensemble unitaire sensiblement en forme de bague ou de demi rotule. Les coupelles métalliques 34 ayant une forme hémisphérique, de même que la surface interne du manchon 42 et la surface externe du demi noyau 52, les couches 32/32a/34a de caoutchouc ont aussi une forme hémisphérique.

On réitère l'opération de moulage pour former un second ensemble unitaire (demi rotule) complémentaire du premier, avec un second manchon 44, une seconde structure lamifiée 35 et un second noyau 54.

On vient ensuite monter ces deux demi-rotules autour du support 20 afin de former la rotule 10.

Pour cela, on rapproche axialement les deux demi-noyaux 52 et 54, ainsi que les manchons 42 et 44 et les structures lamifiés 35 de telle sorte que les demi-noyaux viennent se toucher pour prendre une forme sphérique. A ce moment là, les deux manchons 42 et 44 ne sont pas encore en contact. Le diamètre intérieur du noyau et le diamètre extérieur du support sont choisis de façon à éviter tout glissement axial ou en torsion d'un demi-noyau par rapport à l'autre lorsque la rotule est en service.

On rapproche alors les manchons 42 et 44 à force de telle sorte qu'ils viennent également au contact l'un contre l'autre au niveau de surfaces de contact 42a et 44a qui s'étendent selon un plan de coupure perpendiculaire à l'axe xx' du support 20. On s'arrange pour que, alors que les demi-noyaux 52 et 54 sont en butée l'un contre l'autre, les manchons ne puissent venir en contact l'un contre l'autre que si une certaine force axiale est exercée. En d'autre terme, il y a un certain jeu axial entre les deux manchons avant leur fixation l'un à l'autre.

Ensuite, on maintient les manchons 42 et 44 l'un contre l'autre et on les relie, par exemple par une technique de soudage (laser point par point de préférence), ou par toute autre moyen approprié qui permet notamment de reprendre les efforts axiaux engendrés par la précontrainte.

Lors de la formation de la soudure 48, on évitera que les couches 32b en caoutchouc ne se détériorent à cause de la chaleur dégagée. Cela est notamment facilité par la soudure par points et par un dessin adapté des couches en caoutchouc évitant de les placer trop près de la zone de soudure.

Après soudure de la circonférence des manchons, on peut prévoir de reprendre la pièce en usinage pour supprimer toute surépaisseur de soudure.

On remarquera qu'aussi bien les manchons 42/44 que les bagues 32/34 sont identiques et disposés de façon symétrique de part et d'autre d'un plan perpendiculaire à l'axe xx', de façon à former une rotule 10 bien équilibrée (aux tolérances de fabrication près) autour de ce plan de coupure.

Le rapprochement des manchons le long de l'axe xx' du support, et la fixation des manchons par soudure afin de combler le jeu prévu entre eux, ont pour effet de créer une précontrainte axiale dans les structures lamifiées par cisaillement et compression des couches 32 en caoutchouc. Cette précontrainte est particulièrement utile et permet notamment de limiter le travail en traction du caoutchouc, ce qui permet une durée de vie plus longue.

Il ne reste plus qu'à fixer la rotule 10 ainsi réalisée à une barre anti-roulis (ou à un bras amortisseur) ou à une bielle de liaison pour un bogie ou une caisse de train à grande vitesse.

D'une façon générale, ce type de rotule lamifiée présente un effort ou un couple de rappel élastique dans toutes les directions, c'est-à-dire que l'application d'un effort dans une direction suscite le déplacement sensiblement proportionnel dans cette direction, et que l'application d'un angle de torsion conique (selon tout axe perpendiculaire à l'axe xx') provoque l'apparition d'un couple, également sensiblement proportionnel.

Il y a également une absence totale de glissement des éléments les uns contre les autres, contrairement aux rotules actuelles puisque les couches de caoutchouc subissent en fait un cisaillement dans toutes les sens possibles de rotation.

La réalisation de cette rotule lamifiée permet d'approcher au mieux le modèle de la rotule théorique (trois degrés de liberté en rotation, aucun degré de liberté en translation) grâce à des raideurs en translation (axial et radial) plus élevées, et des raideurs en rotation plus faibles (torsion et torsion conique) que pour les rotules caoutchouc-métal classique (non lamifiées), et autorisant ainsi, à volume égal, des efforts et des débattements plus importants que dans l'art antérieur.

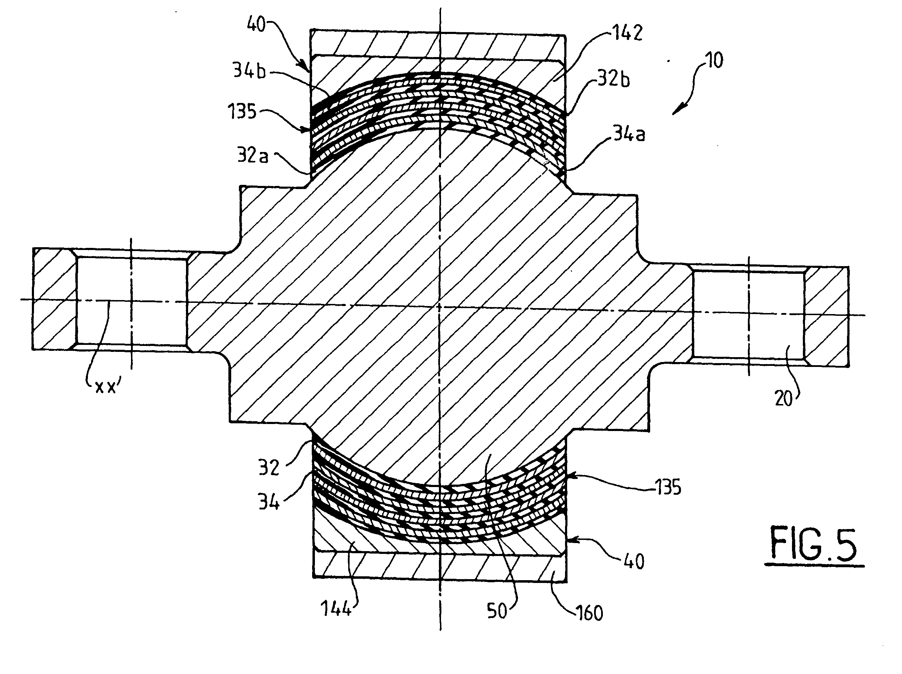

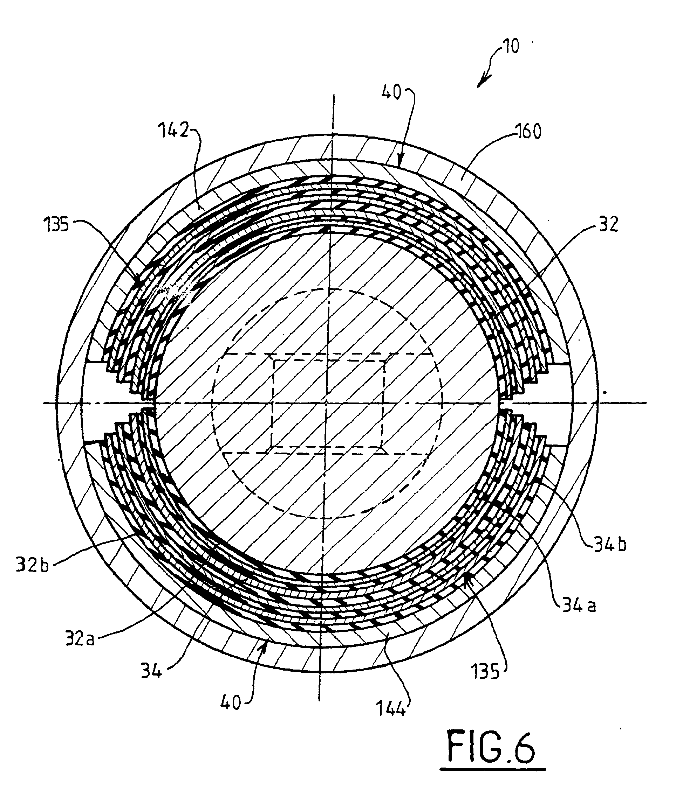

Les figures 5 et 6 représentent une variante de réalisation dans laquelle la rotule 10 comprend deux structures lamifiées 135 constituées chacune par un empilement de couches 32 en matériau élastique, tel que du caoutchouc naturel, et de couches 34 en matériau plus rigide, tel qu'un métal (acier classique). Ces structures lamifiées 135 en forme de demi-coquille à plan de jonction passant par l'axe xx' du support 20, sont entourées par des demi-manchons 142 et 144 de même plan de coupure, ces demi-manchons faisant office de moyens de précontraintes 40 des structures lamifiées 135.

Ainsi, au contraire du mode de réalisation précédent, les demi-coquilles et les demi-manchons ne sont donc pas annulaires et ne se rejoignent plus selon un plan perpendiculaire à l'axe xx', mais selon un plan passant par cet axe xx', comme on peut le voir sur la figure 6. Les demi-coquilles (et les deux demi-manchons) s'étendent donc le long de l'axe xx', en épousant chacune une moitié de la forme sphérique du noyau 50 support 20 sur lequel la structure lamifiée est moulée.

La réalisation de cet organe élastiquement déformable 30 est similaire à celle du mode de réalisation précédent, sauf que la rotule complète est réalisée en une seule fois en moulant le caoutchouc entre les coupelles 34, les demi-manchons 142 et 144 et le noyau 50. Une précontrainte (principalement radiale) est exercée lors de ce moulage par les demi-manchons 142 et 144 sur les structures lamifiées.

Un tube externe 160 peut par ailleurs être serti autour des manchons pour maintenir l'ensemble en place et assurer la précontrainte, bien que cela ne soit pas nécessaire, cette précontrainte pouvant être assurée par le montage.

Les propriétés obtenues avec ce type de rotule sont sensiblement équivalentes à celles du premier mode de réalisation, à ceci près que la première rotule possède la même raideur en radial et en conique quelle que soit la direction d'application de l'effort radial ou du couple conique.

Ce type de rotule peut trouver son utilité en dehors du domaine des barres anti-roulis, par exemple dans le domaine des attaches d'amortisseur, des barres de traction, des mécanismes de freinage, des accouplements, des commandes de dispositifs pneumatiques ou des mécanismes de guidage. La rotule selon l'invention n'est pas non plus limitée à une utilisation dans le domaine ferroviaire et peut être appliquée à l'industrie aéronautique ou automobile.

Par ailleurs, la forme sphérique du noyau 50 peut être directement usinée sur le support, sans avoir à recourir à une pièce intermédiaire.

Bien entendu, le nombre et l'épaisseur des couches peuvent varier en fonction des caractéristiques requises (raideur radiale, en torsion et en torsion conique) et des niveaux de débattement et d'efforts souhaités pour ces trois sollicitations. Le résultat, en terme d'épaisseur de couches principalement, est un compromis entre la raideur en radial, d'une part, et la raideur en torsion et en conique, d'autre part, ainsi que des efforts et angles auxquels est soumise la rotule (valeurs maximales et valeur de fatigue).

Les couches souples peuvent être en caoutchouc naturel ou en tout autre matériau ayant des propriétés d'hyperélasticité.

Enfin, le soudage des manchons peut être remplacé par une fixation par plusieurs vis disposée sur des pattes de chaque manchon, par sertissage ou par tout autre moyen équivalent.

## Revendications

1. Rotule (10) de liaison, par exemple pour barre anti-roulis de véhicule roulant, ladite rotule (10) comprenant un support (20) rectiligne s'étendant selon un axe général d'allongement (xx') et un organe déformable élastiquement (30) monté autour de ce support (20), comportant au moins une structure lamifiée (35 ; 135) composée de couche(s) (32 ; 32a ; 32b) en matériau souple élastiquement déformable et de couche(s) (34 ; 34a ; 34b) en matériau plus rigide, **caractérisée en ce que** l'organe élastiquement déformable (30) comprend des moyens (40) pour précontraindre sa structure lamifiée (35 ; 135).

2. Rotule (10) selon la revendication 1, **caractérisée en ce que** l'organe élastiquement déformable (30) comprend deux structures lamifiées (35) annulaires coaxiales et deux manchons annulaires (42, 44) montés chacun autour d'une structure lamifiée (35) pour précontraindre leurs couches souples élastiquement déformables (32 ; 32a ; 32b) une fois ces manchons (42, 44) liés entre eux à l'aide de moyens de fixation, la rotule (10) présentant un plan de coupure sensiblement perpendiculaire à l'axe xx' du support.

3. Rotule (10) selon la revendication 2, **caractérisée en ce que** les deux manchons (42, 44) présentent chacun une surface de contact (42a, 44a) perpendiculaire à l'axe (xx') du support (20) et sont soudés périphériquement au niveau de ces surfaces.

4. Rotule (10) selon la revendication 3, **caractérisée en ce que** l'organe élastiquement déformable (30) présente un plan de coupure passant par l'axe xx' du support et comprend deux structures lamifiées (135) sensiblement hémisphériques s'étendant le long de l'axe xx' et deux demi-manchons (142, 144), également sensiblement hémisphériques, entourant chacun une structure lamifiée (135) pour précontraindre leurs couches élastiquement déformables (32 ; 32a ; 32b).

5. Rotule (10) selon la revendication 4, **caractérisée en ce qu'**un tube extérieur (160) est serti autour des demi-manchons (142, 144).

6. Rotule (10) selon l'une quelconque des revendications précédentes, **caractérisée en ce que** chaque structure lamifiée (35 ; 135) est constituée par une alternance de couches (32 ; 32a ; 32b) sensiblement hémisphériques en matériau souple hyperélastique et de couches (34 ; 34a ; 34b) sensiblement hémisphériques en matériau plus rigide.

7. Rotule (10) selon la revendication 6, **caractérisée en ce que** chaque structure lamifiée (35) présente une couche souple hyperélastique (32a) à chacune de ses extrémités, l'une au contact d'un noyau (50) sphérique, et l'autre au contact des moyens de précontrainte (40).

8. Rotule (10) selon l'une quelconque des revendications précédentes, **caractérisée en ce que** le matériau souple hyperélastique est un caoutchouc naturel et le matériau rigide est en métal.

9. Rotule (10) selon l'une quelconque des revendications précédentes, **caractérisée en ce que** les couches (32 ; 32a ; 32b) en matériau souple élastiquement déformable et les couches (34 ; 34a ; 34b) en matériau rigide ont chacune une épaisseur de l'ordre du millimètre.

10. Rotule (10) selon l'une quelconque des revendications précédentes, **caractérisée en ce qu'**elle présente une raideur radiale élevée par rapport à sa raideur en torsion et/ou en torsion conique.

11. Rotule (10) selon l'une quelconque des revendications précédentes, **caractérisée en ce que** les couches (32) souples élastiquement déformables sont liées aux couches (34) plus rigides de telle sorte que ces couches souples (32) subissent, en fonctionnement, principalement des efforts de cisaillement, sans aucun glissement par rapport aux couches (34) plus rigides.

12. Barre anti-roulis pour véhicule roulant, par exemple pour train à grande vitesse, **caractérisée en ce qu'**elle est équipée d'une rotule (10) selon l'une quelconque des revendications précédentes.

## Claims

1. Connecting ball joint (10), for example for an anti-roll bar of a running vehicle, said ball joint (10) comprising a straight support (20) running along a general axis of elongation (xx') and an elastically deformable member (30) mounted around this support (20), comprising at least one laminated structure (35; 135) made up of (a) layer(s) (32; 32a; 32b) of elastically deformable flexible material and of (a) layer(s) (34; 34a; 34b) of more rigid material, **characterized in that** the elastically deformable member (30) comprises means (40) for preloading its laminated structure (35; 135).

2. Ball joint (10) according to Claim 1, **characterized in that** the elastically deformable member (30) comprises two coaxial annular laminated structures (35) and two annular sleeve tubes (42, 44) each mounted around one laminated structure (35) to preload their elastically deformable flexible layers (32; 32a; 32b) once these sleeve tubes (42, 44) have been connected together using fixing means, the ball joint (10) having a plane of section roughly perpendicular to the axis xx' of the support.

3. Ball joint (10) according to Claim 2, **characterized in that** the two sleeve tubes (42, 44) each have a contact surface (42a, 44a) perpendicular to the axis (xx') of the support (20) and are welded peripherally at these surfaces.

4. Ball joint (10) according to Claim 3, **characterized in that** the elastically deformable member (30) has a plane of section passing through the axis xx' of the support and comprises two approximately hemispherical laminated structures (135) extending along the axis xx' and two half sleeve tubes (142, 144), also approximately hemispherical, each surrounding a laminated structure (135) to preload their elastically deformable layers (32; 32a; 32b).

5. Ball joint (10) according to Claim 4, **characterized in that** an outer tube (160) is crimped around the half sleeve tubes (142, 144).

6. Ball joint (10) according to any one of the preceding claims, **characterized in that** each laminated structure (35; 135) consists of an alternation of approximately hemispherical layers (32; 32a, 32b) of hyperelastic flexible material and of approximately hemispherical layers (34; 34a; 34b) of a more rigid material.

7. Ball joint (10) according to Claim 6, **characterized in that** each laminated structure (35) has a hyperelastic flexible layer (32a) at each of its ends, one in contact with a spherical core (50), and the other in contact with the preloading means (40).

8. Ball joint (10) according to any one of the preceding claims, **characterized in that** the hyperelastic flexible material is a natural rubber and the rigid material is a metal.

9. Ball joint (10) according to any one of the preceding claims, **characterized in that** the layers (32; 32a; 32b) of elastically deformable flexible material and the layers (34; 34a; 34b) of rigid material each have a thickness of the order of 1 mm.

10. Ball joint (10) according to any one of the preceding claims, **characterized in that** it has a radial stiffness which is high by comparison with its torsional and/or torsional conical stiffness.

11. Ball joint (10) according to any one of the preceding claims, **characterized in that** the elastically deformable flexible layers (32) are connected to the more rigid layers (34) in such a way that these flexible layers (32) experience, in operation, mainly shear forces, with no slipping with respect to the more rigid layers (34).

12. Anti-roll bar for a running vehicle, for example for a high speed train, **characterized in that** it is equipped with a ball joint (10) according to any one of the preceding claims.

## Patentansprüche

1. Verbindungs-Kugelgelenk (10), beispielsweise für den Stabilisator eines rollenden Fahrzeugs, wobei das Kugelgelenk (10) einen geradlinigen Träger (20) aufweist, der sich entlang einer allgemeinen Längungsachse (xx') erstreckt, sowie ein elastisch verformbares Organ (30), das um diesen Träger (20) montiert ist und mindestens eine geschichtete Struktur (35; 135) aufweist, die aus (einer) Schicht/en (32; 32a; 32b) aus einem elastisch verformbaren nachgiebigen Material und (einer) Schicht/en (34; 34a; 34b) aus einem Material mit einer höheren Steifigkeit besteht, **dadurch gekennzeichnet, daß** das elastisch verformbare Organ (30) Mittel (40) zum Vorspannen seiner geschichteten Struktur (35; 135) aufweist.

2. Kugelgelenk (10) nach Anspruch 1, **dadurch gekennzeichnet, daß** das elastisch verformbare Organ (30) zwei ringförmige, koaxiale geschichtete Strukturen (35) aufweist, sowie zwei ringförmige Hülsen (42, 44), die jeweils um eine geschichtete Struktur (35) montiert sind, um deren nachgiebige, elastisch verformbare Schichten (32; 32a; 32b) vorzuspannen, sobald diese Hülsen (42, 44) mit Hilfe von Befestigungsmitteln miteinander verbunden sind, wobei das Kugelgelenk (10) eine Schnittebene aufweist, die im wesentlichen senkrecht zur Achse xx' des Trägers ist.

3. Kugelgelenk (10) nach Anspruch 2, **dadurch gekennzeichnet, daß** die zwei Hülsen (42, 44) jeweils eine zur Achse (xx') des Trägers (20) senkrechte Kontaktfläche (42a, 44a) aufweisen und auf Höhe dieser Flächen umfangsmäßig verschweißt sind.

4. Kugelgelenk (10) nach Anspruch 3, **dadurch gekennzeichnet, daß** das elastisch verformbare Organ (30) eine durch die Achse xx' des Trägers verlaufende Schnittebene aufweist und zwei im wesentlichen halbkugelförmige, geschichtete Strukturen (135) aufweist, die sich entlang der Achse xx' erstrecken, sowie zwei ebenfalls im wesentlichen halbkugelförmige Halbhülsen (142, 144), die jeweils eine geschichtete Struktur (135) umgeben, um deren elastisch verformbare Schichten (32; 32a; 32b) vorzuspannen.

5. Kugelgelenk (10) nach Anspruch 4, **dadurch gekennzeichnet, daß** ein äußeres Rohr (160) um die Halbhülsen (142, 144) gecrimpt ist.

6. Kugelgelenk (10) nach einem der vorherigen Ansprüche, **dadurch gekennzeichnet, daß** jede geschichtete Struktur (35; 135) aus einer Wechselfolge von im wesentlichen halbkugelförmigen Schichten (32; 32a; 32b) aus einem nachgiebigen hyperelastischen Material und von im wesentlichen halbkugelförmigen Schichten (34; 34a; 34b) aus einem Material mit einer höheren Steifigkeit besteht.

7. Kugelgelenk (10) nach Anspruch 6, **dadurch gekennzeichnet, daß** jede geschichtete Struktur (35) eine nachgiebige hyperelastische Schicht (32a) an jedem ihrer Enden aufweist, von denen das eine mit einem kugelförmigen Kern (50) in Berührung steht, und das andere mit Vorspannmitteln (40) in Berührung steht.

8. Kugelgelenk (10) nach einem der vorherigen Ansprüche, **dadurch gekennzeichnet, daß** das nachgiebige hyperelastische Material ein Naturkautschuk ist, und das steife Material aus Metall besteht.

9. Kugelgelenk (10) nach einem der vorherigen Ansprüche, **dadurch gekennzeichnet, daß** die Schichten (32; 32a; 32b) aus nachgiebigem, elastisch verformbaren Material und die Schichten (34; 34a; 34b) aus steifem Material jeweils eine Dicke in der Größenordnung eines Millimeters besitzen.

10. Kugelgelenk (10) nach einem der vorherigen Ansprüche, **dadurch gekennzeichnet, daß** es im Vergleich mit seiner Verdrehsteifigkeit und/oder konischen Verdrehsteifigkeit eine erhöhte radiale Steifigkeit besitzt.

11. Kugelgelenk (10) nach einem der vorherigen Ansprüche, **dadurch gekennzeichnet, daß** die nachgiebigen, elastisch verformbaren Schichten (32) mit den steiferen Schichten (34) derart verbunden sind, daß die nachgiebigen Schichten (32) im Betrieb hauptsächlich Scherbeanspruchungen ohne jegliche Gleitverschiebung in Bezug auf die steiferen Schichten (34) ausgesetzt sind.

12. Stabilisator für ein rollendes Fahrzeug, beispielsweise für einen Hochgeschwindigkeitszug, **dadurch gekennzeichnet, daß** es mit einem Kugelgelenk (10) nach einem der vorherigen Ansprüche ausgerüstet ist.
